# EUROPÄISCHE PATENTSCHRIFT

(11) **EP 2 705 756 B1**
(45) Veröffentlichungstag und Bekanntmachung des Hinweises auf die Patenterteilung: **01.06.2016**
(21) Anmeldenummer: 12006317.7
(22) Anmeldetag: 07.09.2012
(51) Int. Cl.: A22C 15/00, A22C 11/00

(54) **Aufhängevorrichtung sowie Verfahren zum Aufhängen von Würsten, insbesondere Wurstketten**
Suspension device and method for suspending sausages, in particular sausage chains
Dispositif de suspension ainsi que procédé de suspension de saucisses, en particulier de chaînes de saucisses

(43) Veröffentlichungstag der Anmeldung: 12.03.2014
(73) Patentinhaber: Albert Handtmann Maschinenfabrik GmbH & Co. KG, 88400 Biberach (DE)
(72) Erfinder: Fischer, Thomas, 88484 Gutenzell (DE); Osswald, Florian, 88079 Ulm (DE)
(74) Vertreter: Grünecker Patent- und Rechtsanwälte PartG mbB

(56) Entgegenhaltungen:
- EP-A1- 1 847 178
- DE-A1-102005 051 404
- US-A1- 2010 243 409

## Beschreibung

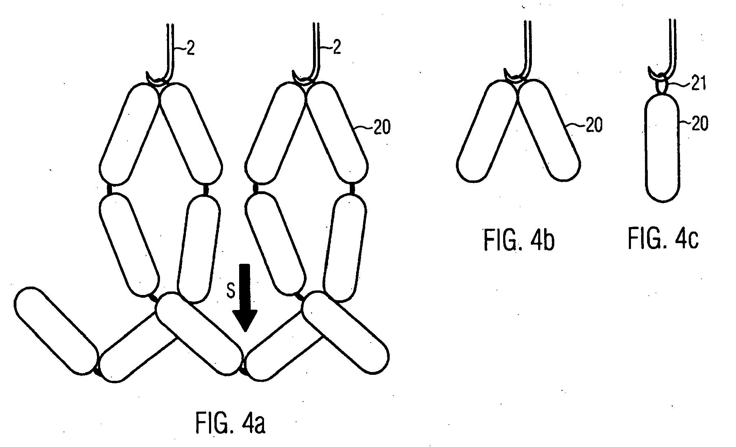

Bei der Würstchenproduktion werden die Produkte als zusammenhängende Kette (Einzelwürste in Reihe miteinander verbunden an der Abteilstelle) hergestellt und im Anschluss an das Füllen und Abdrehen an eine Aufhängevorrichtung übergeben. Dort werden sie von Aufhängehaken in Schleifen bzw. Ketten von zwei oder mehr Würsten aufgenommen (siehe z.B. auch Fig. 4a). Es ist jedoch auch möglich, an den einzelnen Wurstportionen mit einem Schlaufenleger eine Schlaufe zu legen, über die eine oder mehrere Würste dann an Aufhängehaken eines Hängers aufgehängt werden (siehe Fig. 4c). Schließlich ist es auch möglich, zwei oder mehrere Würste an einer Abteilstelle zwischen zwei Portionen am Haken aufzuhängen (siehe Fig. 4b). Die Aufhängehaken sind an der Aufhängevorrichtung umlaufend montiert. Die Abstände der Haken sind mechanisch verstellbar, entweder in Stufen (z.B. in einem 5 mm-Raster) oder aber auch stufenlos und somit an unterschiedliche Anforderungen anpassbar, wie Durchmesser der Würste, Anzahl der Würste pro Rauchstock etc.

Es werden unterschiedliche Bestückungsvarianten der Aufhängevorrichtung praktiziert:
Die verwendeten Wursthüllen sind beispielsweise in der Länge so abgestimmt, dass die produzierte Wurstkette gerade auf einen Rauchstock passt. Dann ist es sinnvoll, die Aufhängevorrichtung in Gruppen zu bestücken, z.B. 4 Gruppen mit je 20 Haken, was in etwa einer Rauchstocklänge entspricht. Die Hakengruppen können dann jeweils einen Abstand zueinander aufweisen, der größer ist als der Abstand der Haken innerhalb einer Gruppe, so dass die Würste bzw. Wurstketten einfach mit Hilfe eines Rauchstocks aus dem Haken abgenommen werden können.

Werden jedoch Wursthüllen verwendet, deren Länge nicht auf die Rauchstocklänge abgestimmt ist, ist die Aufhängevorrichtung in der Regel über ihren gesamten Umfang, d.h. z.B. die gesamte Riemenlänge mit Haken, gleichmäßig bestückt. Diese Art der Bestückung findet vor allem bei der Naturdarmverarbeitung Anwendung. Hier ist die Aufhängevorrichtung komplett bestückt, alle Haken haben in der Regel den gleichen Abstand zueinander. Aufgrund der unterschiedlichen Länge der Naturdärme ergeben sich verschieden lange Gruppen. Es passt jedoch immer nur eine bestimmte Anzahl von Wurstschleifen auf einen Rauchstock. Aus diesem Grund muss vor der Entnahme der Wurstschleifen durch den Rauchstock der Bediener den Wurstkettenstrang nun an der Stelle auftrennen, die für die Rauchstocklänge das Ende der Gruppe bildet. An der Trennstelle müssen die Wurstenden eventuell noch verschlossen werden (durch Verknoten, Klippen, Verschweißen). Die richtige Trennstelle hierfür schnell zu finden, kann wegen des vorgegebenen konstanten Abstands zwischen den Haken Schwierigkeiten bereiten. Es gibt verschiedene Varianten, wie bislang dieses Problem gehandhabt wurde.

### Variante 1:

Der Bediener zählt die Haken bzw. Anzahl der Schlaufen und trennt die Wurstkette nach Erreichen der gewünschten Schlaufenzahl. Dies ist mühsam und erfordert eine hohe Konzentration. Es können sehr leicht Fehler passieren.

### Variante 2:

Bei der Produktion kann hier zur Hilfestellung ein leerer Haken die Übernahmeposition überfahren, d.h. nicht behängt werden, so dass eine Leerstelle entsteht. Diese Leerfahrt muss jedoch schneller erfolgen, wobei sich die dafür erforderliche erhöhte Beschleunigung negativ auf die bereits aufgehängten Portionen auswirken kann. Diese Dynamik wirkt sich auch negativ auf die Wurstschleifenaufnahme und den Arbeitsablauf des Bedieners beim Verschließen der Gruppenenden aus.

### Variante 3:

Eine weitere Variante ist, Haken mit unterschiedlichen Farben einzusetzen, um das Gruppenende zu kennzeichnen. Diese Lösung ist jedoch wenig flexibel. Beim Produktwechsel auf andere Wurstgrößen oder Gruppengrößen müssen die Haken aufwendig neu bestückt werden.

Eine Aufhängevorrichtung gemäß dem Oberbegriff von Anspruch 1 ist aus dem Dokument US 2010/243409 bekannt.

Sämtlichen bisher am Markt befindlichen Aufhängevorrichtungen fehlt somit die Möglichkeit, dass diese schnell und einfach auf andere Anforderungen umgestellt werden können, und der Bediener schnell und einfach ein Gruppenende erkennt, um beispielsweise eine durchgehende Wurstkette am Gruppenende zu durchtrennen oder aber gezielt den Rauchstock in eine Gruppe einzufahren, um eine entsprechende Gruppe mit einer bestimmten Größe abzunehmen.

Hiervon ausgehend liegt der vorliegenden Erfindung die Aufgabe zugrunde, eine Vorrichtung und ein Verfahren bereitzustellen, die ermöglichen, dass das Ende und/oder der Anfang einer Wurstgruppe einfach erkannt werden kann, um eine vorbestimmte Trennposition oder Abnahmeposition zwischen zwei Wurstgruppen zu lokalisieren.

Diese Aufgabe wird durch die Merkmale der Ansprüche 1 und 13 gelöst.

Gemäß der vorliegenden Erfindung weist die Aufhängevorrichtung zum Aufhängen von Würsten d.h. Wurstschlaufen und insbesondere Wurstketten, mehrere Aufhängehaken auf. Die Aufhängevorrichtung kann mehrere Gruppen von Würsten aufnehmen, die in einer Gruppe auf jeweils n-Aufhängehaken aufgehängt werden können (n ∈ IN). Die Aufhängevorrichtung weist mindestens eine veränderbare Anzeigeeinrichtung auf, die ein Gruppenende und/oder einen Gruppenanfang anzeigen kann. Diese Anzeigeeinrichtung ist zusätzlich zu den Haken vorgesehen. Durch die Anzeigeeinrichtung kann der Bediener genau erkennen, an welcher Stelle die Wurstkette durchtrennt werden muss und/oder aber an welcher Stelle der Rauchstock eingefädelt bzw. wieder aus den Würsten herausgefädelt werden muss, um eine Gruppe einer bestimmten Größe abzunehmen. Somit ist ein sicherer und genauer Betrieb gewährleistet. Die Anzeigeeinrichtung erlaubt einen kontinuierlichen Betrieb, ohne dass die Hakenbewegung zum Durchtrennen des Strangs oder zum Abnehmen der Gruppe gestoppt werden muss. Da die Anzeige während der Bewegung der Wurstgruppe erfolgt, ist der Bediener nicht gezwungen, den Wurststrang zu einem exakten Zeitpunkt an einem bestimmten Ort zu durchtrennen, sondern hat dazu ein größeres Zeitfenster, was die Arbeitsbedingungen erleichtert. Die veränderbare Anzeigeeinrichtung kann an unterschiedliche Produktionsbedingungen angepasst werden. Bei Kaliberwechsel und somit einer Änderung der Anzahl an Aufhängehaken pro Gruppe kann die veränderbare Anzeigeeinrichtung angepasst werden und dann korrekt, ohne Umrüsten, den Gruppenanfang und/ oder das Gruppenende einer Gruppe mit veränderter Hakenzahl anzeigen. Veränderbar bedeutet in diesem Zusammenhang, dass sich der Zustand der Anzeigeeinrichtung derart ändern kann, dass ein Bediener mindestens zwei unterschiedliche Zustände optisch erkennen kann um zu beurteilen ob ein Gruppenanfang und / oder -ende vorliegt oder nicht. Der Zustand kann während des Betriebs der Aufhängevorrichtung, d.h. während der Produktion verändert werden.

Ganz besonders vorteilhaft ist diese Lösung dann, wenn die Abstände zwischen den Aufhängehaken konstant sind, und die Aufhängehaken z.B. über ein umlaufendes Antriebselement, wie beispielsweise einen Riemen oder eine Kette angetrieben werden. Somit kann sich der Bediener leicht orientieren ohne Haken zu zählen. Die Anzeigeeinrichtung kann dann während der Produktion an die Rauchstocklänge angepasst werden.

Vorteilhafterweise weist die Aufhängevorrichtung eine Einstelleinrichtung auf, über die der Zustand der Anzeigeeinrichtung veränderbar ist, beispielsweise mechanisch oder aber auch durch Schalten, beispielsweise das Ein- und Ausschalten einer Lichtquelle bzw. LED.

Um ein Gruppenende und/oder einen Gruppenanfang einer nachfolgenden Gruppe erkennen zu können, kann also der Zustand der Anzeigeeinrichtung zwischen einem ersten Zustand, der einem Gruppenanfang und/oder einem Gruppenende der Aufhängehaken entspricht und einem zweiten Zustand, der keinem Gruppenanfang oder Gruppenende entspricht verändert werden. Somit kann der Bediener sehr einfach erkennen, dass beispielsweise nach einer bestimmten Anzeige oder Markierung oder vor einer bestimmten Anzeige oder Markierung oder aber auch zwischen zwei Anzeigen oder Markierungen, der Wurststrang durchtrennt werden muss.

Es ist jedoch auch möglich, dass der Zustand veränderbar ist zwischen einem ersten Zustand, der Aufhängehaken einer ersten Gruppe anzeigt und einem zweiten Zustand, der die Aufhängehaken einer nachfolgenden (oder vorauseilenden) zweiten Gruppe anzeigt. Das heißt, dass der Bediener deutlich sieht, wann eine Gruppe zu Ende ist, da die Haken bzw. Wurstschleifen der folgenden Gruppe eine veränderte Anzeigeeinrichtung aufweisen.

Vorteilhafterweise umfasst die Aufhängevorrichtung eine Steuerung, in der die bestimmte Aufhängehakenzahl pro Gruppe eingegeben werden kann, wobei die Steuerung die Einstelleinrichtung ansteuert. Eine entsprechende Steuerung erlaubt einen automatischen Betrieb der Aufhängevorrichtung, wobei auch während der Produktion die Anzeigeeinrichtungen entsprechend angepasst werden können.

Vorteilhafterweise ist die Anzeigeeinrichtung jeweils als ein am Haken angeordnetes, in seiner Position und/oder Farbe veränderbares Teil ausgebildet. Dadurch, dass die Anzeigeeinrichtung am Haken befestigt ist, kann sie sich zusammen mit den Haken in Transportrichtung bewegen, so dass sich die Anzeige des Gruppenendes und/oder des Gruppenanfangs zusammen mit den Würsten synchron mitbewegt, so dass ein sehr exaktes Auffinden des Gruppenendes zeitunabhängig möglich ist. Durch Ändern der Farbe oder der Position kann der Bediener einfach die unterschiedlichen Zustände der Anzeigeeinrichtung erkennen. Dabei können beispielsweise die Anzeigeeinrichtungen mechanisch in ihrer Position verändert, z.B. gedreht, angehoben, verkippt etc. werden, damit der Bediener einfach den Unterschied erkennen kann. Es ist auch möglich, Lichtquellen, insbesondere LEDs einzusetzen, die zur Veränderung ein- und ausgeschaltet werden können oder in unterschiedlichen Farben leuchten.

Das in seiner Position veränderbare Teil kann dabei beispielsweise ein Verriegelungsbolzen sein, der durch Drücken seines Betätigungsknopfes entweder in eine obere oder untere Position gebracht werden kann, wobei der Bediener erkennen kann, ob sich der Verriegelungsbolzen in einem ersten Zustand, d.h. z.B. in einer angehobenen Position oder in einem zweiten Zustand, d.h. in einer unteren Position, befindet. Die Anzeigeeinrichtung kann auch beispielsweise ein drehbar gelagertes Teil sein, das an seinem Umfang, z.B. vorne und hinten, unterschiedliche Farben aufweist. Durch Drehen des Teils um einen bestimmten Winkelbereich, z.B. 180°, kann dann in einem ersten Zustand eine erste Farbe erkannt werden und in einem zweiten Zustand wird vom Bediener eine andere Farbe erkannt. Auch können Teile verwendet werden, die eine geometrische Form aufweisen, deren Vorderansicht durch Drehen des Teils um eine Achse um einen bestimmten Winkel sich zwischen einem ersten Zustand und einem zweiten Zustand ändert. Ein entsprechendes Teil kann beispielsweise als dreiseitiges Prisma, vorzugsweise regelmäßiges dreiseitiges gleichschenkliges Prisma ausgebildet sein, wobei entweder die Kante des Prismas oder aber die Seitenfläche des Prismas erkannt werden kann. Dies sind jedoch nur mögliche Beispiele.

Gemäß einer anderen Ausführungsform kann die Anzeigeeinrichtung eine Lichtquelle, insbesondere LED, umfassen. Durch Ein- und Ausschalten der Lichtquelle kann der Bediener den ersten Zustand (z.B. leuchtende Lichtquelle) sehr gut von einem zweiten Zustand (ausgeschaltete Lichtquelle) erkennen. Es wäre möglich, dass die Lichtquellen ebenfalls an den Haken angeordnet sind und sich mit diesen mitbewegen und über Schleifkontakte mit Strom versorgt werden. Auch die Steuerung kann dann entweder über Schleifkontakte oder aber über Funksignale erfolgen.

Ganz besonders vorteilhaft ist es jedoch, wenn mehrere Lichtquellen, insbesondere mehrere LEDs auf einer Lichtleiste angeordnet sind. Diese Lichtleiste ist zumindest teilweise, d.h. abschnittsweise an der Umlaufbahn der Haken angeordnet, so dass die Lichtquellen bestimmten Haken bzw. Positionen der Haken zugeordnet werden können. Gibt es nur einen Bediener, kann es ausreichen, dass die Lichtleiste nur auf einer Seite der Aufhängevorrichtung vorgesehen ist. Ist die Lichtleiste auch auf der Rückseite der Aufhängevorrichtung vorgesehen, so kann auch in diesem Bereich gearbeitet werden, wobei dann auch dort die Wurstketten aufgetrennt werden können und/oder die Wurstketten bzw. Würste aus den Haken abgenommen werden können. Die Lichtleiste kann auch als geschlossene Lichtleiste vorgesehen sein. Die einzelnen Lichtquellen bzw. LEDs sind einzeln ansteuerbar und können über die Einstelleinrichtung, z. B. einen Schalter, ein- und ausgeschaltet werden. Eine Steuerung steuert die Einstelleinrichtung dabei so an, dass der Gruppenanfang und/oder das Gruppenende durch eine oder mehrere in Transportrichtung der Aufhängehaken mitlaufend leuchtende Lichtquellen, insbesondere LEDs, angezeigt wird. Wie vorab beschrieben, können sich die Anzeigeeinrichtungen, die am Haken angeordnet sind, zusammen mit den Haken in Transportrichtung T mitbewegen. Die Lichtquellen der Lichtleiste bzw. Lichtlaufleiste, die fest angeordnet sind, können so angesteuert werden, dass sich die Anzeige synchron zum Transport der Wurstketten mitbewegt, d.h. mitläuft. Mitlaufend betrieben bedeutet hier also, dass die Lichtquellen in Abhängigkeit der Position des Gruppenendes und/oder Anfangs angesteuert werden. Somit muss nicht die Leiste selbst bewegt werden.

Vorzugsweise umfasst die Lichtleiste einen transparenten Schutzmantel, insbesondere aus Silikon, z.B. einen Silikonschlauch. Somit ist die Lichtleiste ausreichend vor Feuchtigkeit und Verschmutzung geschützt. Eine entsprechende Lichtleiste kann dann auch einfach gereinigt werden, was insbesondere im Lebensmittel produzierenden Bereich aus Hygienegründen außerordentlich wichtig ist.

Vorteilhafterweise umfasst die Lichtleiste mehrfarbige Lichtquellen. Dabei können entweder Einzellichtquellen verwendet werden, die Licht unterschiedlicher Wellenlänge, d.h. unterschiedlicher Farbe emittieren können oder aber es sind Lichtquellen einer ersten Farbe nebeneinander angeordnet und Lichtquellen einer zweiten Farbe sind unterhalb der Lichtquellen der ersten Farbe angeordnet, oder daneben.

Unabhängig von den aufgezeigten Detaillösungen ist es wichtig, dass das angezeigte Gruppenende und/oder der angezeigte Gruppenanfang sich synchron zur Bewegung der Aufhängehaken in Transportrichtung T mitbewegt. Dies kann einerseits, wie bereits beschrieben geschehen, indem die Anzeigeeinrichtungen am Haken befestigt sind. Somit kann die Anzeigeeinrichtung einerseits den Anzeigezustand ändern, andererseits aber auch die Position und zwar entsprechend der Bewegung der Haken. Auch das gezielte Ansteuern der Lichtquellen in einer Lichtleiste ermöglicht den gleichen Effekt, nämlich, dass die in Transportrichtung hintereinander angeordneten Lichtquellen derart angesteuert werden können, dass sich die Position des ( durch Leuchten oder nicht Leuchten ) angezeigten Gruppenendes und/oder Gruppenanfangs mit der Bewegung der Aufhängehaken in Transportrichtung mitbewegt. Der Zustand der nebeneinander angeordneten Lichtquellen ändert sich in Abhängigkeit der jeweils aktuellen Position des Gruppenendes und/oder Gruppenanfangs.

Gemäß dem erfindungsgemäßen Verfahren wird das Gruppenende und/oder der Gruppenanfang einer Wurstgruppe über eine veränderbare Anzeigeeinrichtung angezeigt. Die Anzeige des Gruppenendes und/oder des Gruppenanfangs erfolgt synchron zur Bewegung der Aufhängehaken in Transportrichtung. Insbesondere wird dabei das Gruppenende und/oder der Gruppenanfang durch eine oder mehrere auf einer Lichtleiste in Transportrichtung mitlaufend betriebene Lichtquellen, insbesondere LEDs, angezeigt.

Bei dem erfindungsgemäßen Verfahren kann dann die Wurstkette auf den Aufhängehaken in Transportrichtung vor dem angezeigten Gruppenende bzw. nach dem angezeigten Gruppenanfang der folgenden Gruppe durchtrennt werden und/oder an der angezeigten Stelle ein Rauchstock zur Entnahme der folgenden Gruppe eingeführt werden. Somit kann ein korrekter Betrieb sichergestellt werden.
- Fig. 1: zeigt eine Seitenansicht eines ersten Ausführungsbeispiels gemäß der vorliegenden Erfindung.
- Fig. 2a: zeigt grob schematisch eine Aufsicht einer ersten Betriebsvariante des ersten Ausführungsbeispiels zu einem ersten Zeitpunkt.
- Fig. 2b: zeigt die in Fig. 2a gezeigte Vorrichtung zu einem zweiten Zeitpunkt.
- Fig. 3a: zeigt grob schematisch eine Aufsicht auf eine zweite Variante des ersten Ausführungsbeispiels zu einem ersten Zeitpunkt.
- Fig. 3b: zeigt die in Fig. 3a gezeigte Vorrichtung zu einem zweiten Zeitpunkt.
- Fig. 4a: zeigt eine in Schleifen aufgehängte Wurstkette.
- Fig. 4b: zeigt Würste, die an einer Abteilstelte an dem Haken aufgenommen sind.
- Fig. 4c: zeigt schematisch eine Wurstportion an einer Schlaufe.
- Fig. 5: zeigt in schematischer Darstellung eine Aufsicht auf eine erste Betriebsvariante eines zweiten Ausführungsbeispiels gemäß der vorliegende Erfindung.
- Fig. 6: zeigt schematisch eine Aufsicht einer zweiten Betriebsvariante gemäß einem zweiten Ausführungsbeispiel gemäß der vorliegenden Erfindung.
- Fig. 7a-d: zeigen unterschiedliche Zustände eines Verriegefungsbolzens in Seitenansicht.
- Fig. 8: zeigt einen Verriegelungsbolzen in perspektivischer Darstellung.
- Fig. 9a: zeigt grob schematisch eine Vorderansicht eines Hakens mit einem Verriegelungsbolzen in einer unteren Position.
- Fig. 9b: zeigt den in Fig. 9a gezeigten Haken mit dem Verriegelungsbolzen in einer oberen Position.
- Fig. 10a: zeigt grob schematisch eine Vorderansicht eines Aufhängehakens mit einem dreiseiteigen Prisma, dessen Seitenfläche nach vorne gewandt ist.
- Fig. 10b: zeigt den in Fig. 10a gezeigten Haken, bei dem die Spitze bzw. Kante des Prismas nach vorne gedreht ist.
- Fig. 11a: zeigt eine Aufsicht auf das in Fig. 10a gezeigte Prisma.
- Fig. 11b: zeigt eine Aufsicht auf das in Fig. 10b dargestellte gedrehte Prisma.
- Fig. 12a: zeigt grob schematisch eine Vorderansicht eines Aufhängehakens mit einer Anzeigeeinrichtung in einer ersten Position.
- Fig. 12b: zeigt den in Fig. 12a gezeigten Aufhängehaken 2, bei dem die Anzeigeeinrichtung eine gedrehte Position aufweist.
- Fig. 13a: zeigt eine Aufsicht auf die Anzeigeeinrichtung in Fig. 12a.
- Fig. 13b: zeigt eine Aufsicht auf die um 180° gedrehte Anzeigeeinrichtung in Fig. 12b.
- Fig. 14: zeigt grob schematisch in perspektivischer Darstellung eine dritte Ausführungsform gemäß der vorliegenden Erfindung mit einem Laserpointer als Anzeigeeinrichtung.
- Fig. 15: zeigt schematisch ein Blockschaltbild für Steuerung der Einstelleinrichtung

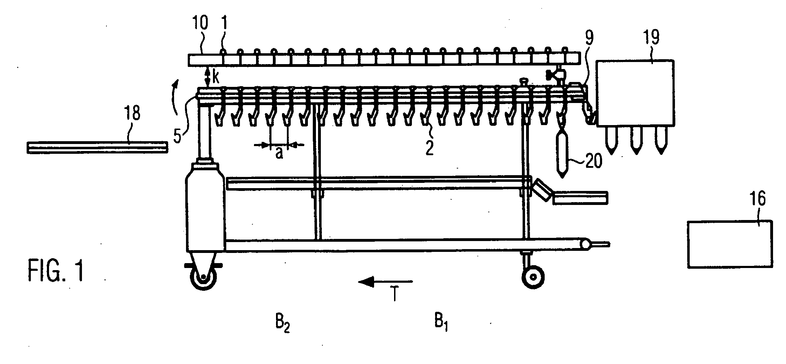

Wie aus Fig. 1 hervorgeht, umfasst die Aufhängevorrichtung mehrere auf einer geschlossenen Umlaufbahn umlaufende Aufhängehaken 2. Die Aufhängehaken sind vorzugsweise parallel zueinander angeordnet und die Umlaufbahn läuft im Wesentlichen horizontal.

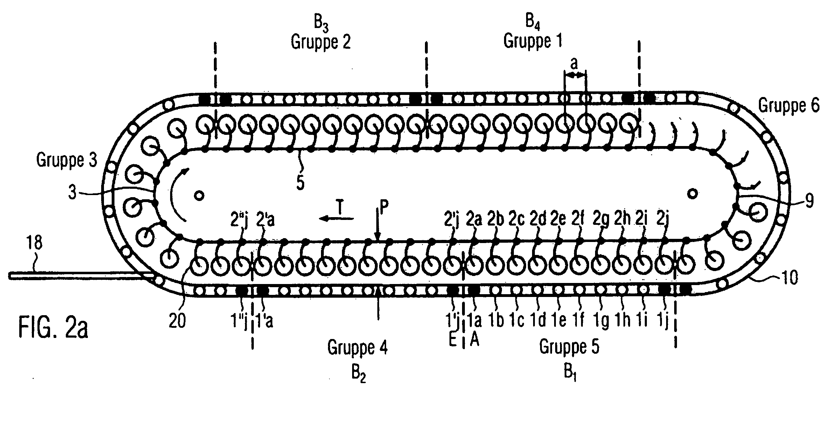

Die Aufhängehaken 2 dienen dazu, Würste bzw. Wurstschlaufen im Bereich einer Übergabeposition 9 aufzunehmen und in Transportrichtung T, d.h. in Umlaufrichtung der Haken, in vorgesehene Abnahmebereiche B1 bis B4 zu transportieren. Der Abnahmebereich ist der Bereich, in dem die Aufhängehaken zur Abnahme der Würste, beispielsweise durch einen Rauchstock 18, angeordnet sind. Es kann ein Abnahmebereich B1 vorgesehen sein. Es ist auch möglich, mehrere Abnahmebereiche sowohl auf der Vorderseite und/oder der Rückseite vorzusehen (siehe z.B. auch Fig. 2a). Die Würste hängen dabei in Wurstschleifen über den Haken. Dabei kann unter Wurstschleife entweder eine Schlaufe 21, die an einer Wurst oder mehreren Würsten von einem Schlaufenleger angebracht wurde, verstanden werden (Fig. 4c) oder aber Schlaufen, die durch in Schleifenform vorliegenden Wurstketten gebildet sind (Einzelwürste in Reihe, verbunden zueinander an Abdrehstellen) (siehe hierzu Fig. 4a). Es ist auch möglich, dass mindestens zwei Würste 20 an ihrer Abteil- bzw. Abdrehstelle auf dem Aufhängehaken 2 aufgenommen sind.

Die vorliegende Erfindung ist besonders geeignet für Wurstketten, wie sie in Fig. 4a gezeigt sind, und die am Ende einer Wurstgruppe, wie durch den Pfeil S angedeutet ist, vor der Abnahme über einen Rauchstock 18 von einem Bediener noch mit Hilfe einer Schneideinrichtung durchtrennt werden müssen. Aber auch für das bloße Abnehmen mit einem Rauchstock und zum Erkennen eines Endes einer Wurstgruppe ist die vorliegende Erfindung bei einer Aufhängung, wie sie in Fig. 4b und Fig. 4c gezeigt ist, geeignet.

Im vorderen Bereich der Aufhängevorrichtung 100 fädelt ein Aufhängehaken 2 an der Übergabeposition 9 in die Wurstschleife ein, die von einer Transporteinrichtung 19 mit einer Übergabeeinrichtung, von einer Füllmaschine kommend, antransportiert wird, zieht diese ab und transportiert sie in Transportrichtung T weiter. Entsprechende Übergabe- und Transporteinrichtungen sind bekannt und werden hier deshalb nicht näher erläutert. Die in Fig. 1 gezeigte Aufhängevorrichtung weist Räder auf und ist somit beweglich und kann mit ihrem Vorderende exakt in eine Aufnahmeposition 9 verfahren werden.

Die Aufhängehaken 2 sind hier an einem umlaufenden Antriebselement 5, beispielsweise in Form eines Antriebriemens oder einer Antriebkette angeordnet, die von einem Motor angetrieben werden können. Die Aufhängehaken 2 weisen vorteilhafterweise einen konstanten Abstand a zueinander auf. Der Abstand a ist beispielsweise in einem mechanisch festgelegten Raster oder aber auch stufenlos verstellbar.

Die Würste bzw. Wurstschlaufen werden von der Aufhängevorrichtung 100 abgenommen, indem ein Rauchstock 18 in die Wurstschlaufe, insbesondere in die Wurstkette, eingefahren wird und dann angehoben wird. Abhängig vom Kaliber der produzierten Würste und auch abhängig von der Rauchstocklänge, passt immer nur eine bestimmte Anzahl von Wurstschlaufen bzw. Wurstketten auf einen Rauchstock, die einer bestimmten Anzahl an Haken 2, auf denen diese aufgehängt sind, entspricht, da auch der Abstand a kaliberabhängig ist. Werden nämlich Wursthüllen verwendet, deren Länge nicht auf die Rauchstocklänge abgestimmt ist, ist die Aufhängevorrichtung in der Regel über den gesamten Umfang mit Haken gleichmäßig bestückt (a = const). Diese Art der Bestückung findet vor allem bei der Naturdarmverarbeitung Anwehdung.

Damit der Bediener die Gruppenlänge bzw. den Gruppenanfang und das Gruppenende erkennen kann, ist gemäß der vorliegenden Erfindung mindestens eine veränderbare Anzeigeeinrichtung 1 vorgesehen. Dies ist besonders wichtig, da insbesondere vor der Entnahme der Wurstketten mit dem Rauchstock, der Bediener den Strang an der Stelle auftrennen muss, die für die Rauchstocklänge das Ende der Gruppe bildet. An der Trennstelle müssen die Wurstenden eventuell auch noch verschlossen werden (durch Verknoten, Klippen, Verschweißen etc.). Gemäß der vorliegenden Erfindung kann der Bediener die Trennstelle hier schnell finden, obwohl die Haken 2 gleichen Abstand a zueinander aufweisen.

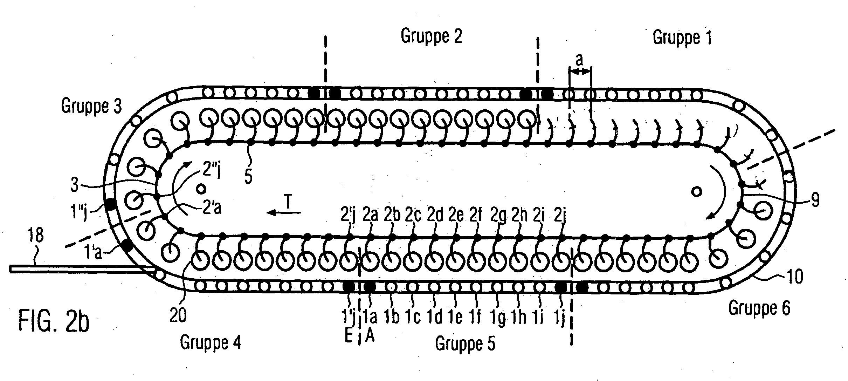

Gemäß dieser Ausführungsform ist als veränderbare Anzeigeeinrichtung 1 eine Lichtquelle, insbesondere eine LED vorgesehen. Diese kann über eine Steuerung 16 und eine Einstelleinrichtung 3 in Form einer Schalteinheit angesteuert und ein- und ausgeschaltet werden. Gemäß dieser Ausführungsform weist die Aufhängevorrichtung 100 eine Lichtleiste bzw. Lichtlaufleiste 10 auf, bei der eine Vielzahl von Lichtquellen in Transportrichtung der Haken 2 hintereinander, getrennt voneinander ansteuerbar, angeordnet sind. Die Lichtleiste kann, wie in den Fig. 2-3 dargestellt ist, an der Umlaufbahn der Aufhängehaken 2 entweder vollständig umlaufend oder zumindest abschnittsweise angeordnet sein. In den Figuren ist die Lichtleiste umlaufend angeordnet. Es ist jedoch auch möglich, die Lichtleiste, je nach Verwendung der Aufhängevorrichtung, nur abschnittsweise vorzusehen, z.B. nur im vorderen Bereich und/oder nur im hinteren Bereich. Die Lichtleiste kann, wie aus Fig. 1 hervorgeht, oberhalb der umlaufenden Aufhängehaken 2 angeordnet werden. Dies bringt den Vorteil mit sich, dass es zu keiner Kollision mit längeren zu transportierenden Würsten kommt. Dabei ist darauf zu achten, dass die Lichtlaufleiste möglichst nahe zu den Aufhängehaken angeordnet ist, da das Gruppenende bzw. der Gruppenanfang dann besser und eindeutiger erkannt werden kann. Wird die Lichtlaufleiste 10 allerdings zu tief positioniert, kollidiert der behängte Rauchstock bei der Entnahme aus den Haken. Die Lichtlaufleiste ist etwa um k = 1 bis 15 cm höher als das obere Ende des umlaufenden Antriebsmittels 5 angeordnet (siehe Figur 1). Der Abstand p (siehe z.B. Figur 2a) in Horizontalrichtung zwischen umlaufendem Antriebsmittel 5 und der Lichtlaufleiste liegt in einem Bereich von ca. 0 cm bis ± 15 cm, d.h. die Lichtlaufleiste kann innerhalb oder außerhalb des Antriebsmittels angeordnet sein.

Der Abstand von zwei aufeinanderfolgenden Lichtquellen liegt in einem Bereich von ca. 5 mm bis 40 mm. Der Abstand a zwischen zwei benachbarten Haken ist einstellbar in einem Bereich von 20 mm bis 150 mm. Jede Lichtquelle, d.h. hier jede LED, ist über ein Signal, beispielsweise ein SPI-Signal, einzeln adressierbar. Damit können beliebige Lichtszenarien in Abhängigkeit der Zeit und in diesem Fall insbesondere in Abhängigkeit der Position eines Gruppenendes oder Gruppenanfangs erstellt werden. Da das Lichtquellen- bzw. LED-Rastermaß wie zuvor beschrieben, sehr klein ist, können die Lichtquellen z.B. derart angesteuert werden, dass der Abstand von zwei aufeinander folgenden angesteuerten Lichtquellen in etwa dem Abstand a der Haken entspricht. Somit kann der Bediener gut der Hakenbewegung folgen. Eine entsprechende Lösung bringt den Vorteil mit sich, dass bei sich änderndem Hakenabstand a auch der Abstand von aufeinander folgenden Lichtquellen, die angesteuert werden, angepasst werden kann, derart, dass der Abstand im Wesentlichen dem Abstand a zwischen den Haken entspricht. Denkbar ist auch nur eine einzelne leuchtende Lichtquelle direkt an der Trennstelle zwischen zwei Haken.

Vorzugsweise umfasst die Lichtleiste einen transparenten Schutzmantel, insbesondere aus Silikon, z.B. einen Silikonschlauch. Somit ist die Lichtleiste ausreichend vor Feuchtigkeit und Verschmutzung geschützt. Eine entsprechende Lichtleiste kann dann auch einfach gereinigt werden, was insbesondere im Lebensmittel produzierenden Bereich aus Hygienegründen außerordentlich wichtig ist.

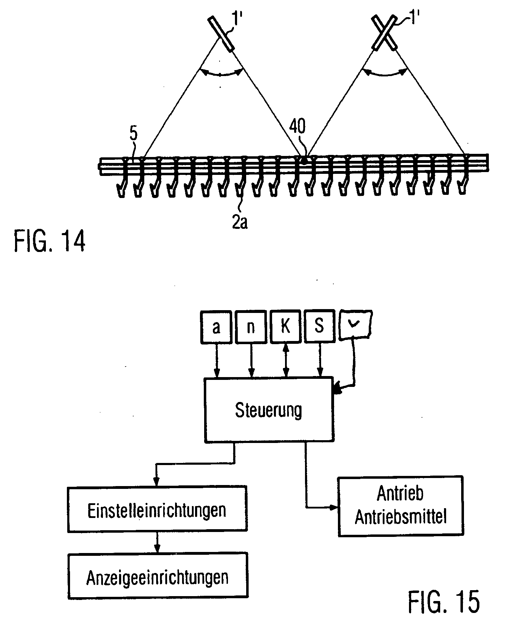

Wie aus Fig. 15 hervorgeht kann in die Steuerung 16 die Anzahl n der Aufhängehaken pro Gruppe eingegeben werden. Es kann auch der Abstand "a" der Haken in die Steuerung eingegeben werden. Weiter ist die Steuerung 16 auch mit dem Antrieb, d.h. beispielsweise dem Motor für das umlaufende Antriebsmittel 5 verbunden und steuert den Antrieb und die Einstelleinrichtungen der Lichtquellen entsprechend derart, dass eine synchrone Bewegung des Lauflichts zu den Aufhängehaken 2 möglich ist.

Darüber hinaus kann die Steuerung 16 auch noch mit Komponenten K der Produktionslinie, die vor der Aufhängeeinrichtung vorgesehen sind, verbunden sein, wie beispielsweise mit einer Füllmaschine sowie entsprechenden Transportmitteln.

Die Steuerung 16 kann auch zur Bestimmung der Position der Haken zu einem bestimmten Zeitpunkt z.B. des ersten Hakens einer Gruppe mit einem Sensor S (der z.B. an der Aufhängeeinrichtung angeordnet ist) verbunden sein und z.B. einen Zähler zum Zählen der Haken aufweisen oder die Hakenposition über die Parameter a, n und der Transportmittelgeschwindigkeit ermitteln.

Alternativ kann die Steuerung zur Bestimmung der zuvor genannten Hakenposition diese Signale auch von der Füllmaschine erhalten. Beim Einschalten der Maschine wird eine Referenzfahrt (d.h. die Haken werden zur Festlegung der Hakenposition über einen Antriebsmotor über eine Referenzstrecke bewegt) durchgeführt und der erste Haken in Übernahmeposition gebracht. Dieser nimmt die 1. Wurst bzw. Wurstkette auf. Die Steuerung erhält von der Füllmaschine ein entsprechendes Signal dass die erste Wurst an der Übergabestation 9 übergeben wird). Gleichzeitig wird die LED an dieser Position diesem ersten Haken zugeordnet. Über die Parameter n, a und der Transportgeschwindigkeit der Haken können z.B. jeweils die Hakenpositionen sowie Gruppenanfang und -ende bestimmt werden und entsprechende räumlich zugeordnete Lichtquellen bestimmt werden. Sobald der Haken um eine Position weiterfährt, wird z. B. der Zustand aller LEDs in Transportrichtung als Register um einen Hakenabstand weitergeschoben.

Unabhängig von einer Detaillösung ist es lediglich wichtig, dass die Steuereinrichtung die aktuelle Hakenposition von zumindest dem Gruppenanfang und/oder Ende kennt und diesen Positionen entsprechende Lichtquellen bzw. LEDs, die angesteuert werden sollen zuordnet.

Wie auch schon zuvor beschrieben, wird bei dem erfindungsgemäßen Verfahren in der Übergabeposition 9 eine Wurstschleife, insbesondere eine Wurstkette, von den Haken 2 aufgenommen und in Transportrichtung T gefördert. Bei diesem Ausführungsbeispiel wird der Gruppenanfang durch eine leuchtende LED angezeigt. In Fig. 2a wurde die erste Gruppe bereits in den rechten vorderen Bereich der Aufhängevorrichtung 100 transportiert. In dieser Darstellung weist eine Gruppe beispielsweise zehn Wurstschleifen bzw. -ketten auf, die entsprechend jeweils auf 10 Haken 2a-2j aufgehängt sind. Den n-Haken 2a-2j sind zu einem bestimmten Zeitpunkt räumlich n entsprechende Anzeigeeinrichtungen 1ₐ-1ⱼ zugeordnet. Wie in Fig. 2a dargestellt ist, leuchtet jeweils die Anzeigeeinrichtung, die hier dem ersten Haken 2a und den letzten Haken 2e räumlich zugeordnet ist bzw. in diesem Fall nach oben versetzt gegenüberliegt. In Fig. 2a ist die Lichtleiste aus Darstellungsgründen so gezeigt, dass die Lichtquellen nach oben weisen. Dann würde der Bediener von oben auf die Haken schauen. Es ist jedoch genauso möglich, dass die Lichtquelle so angeordnet ist, dass sie seitlich angeordnet ist, derart, dass der Bediener die Lichtquellen sieht, wenn er auf die Aufhängevorrichtung 100 von der Seite (z.B. auf Fig. 1 schauend) betrachtet.

Durch die leuchtenden Lichtquellen 1 a und 1 j ist der Gruppenanfang und das Gruppenende der Gruppe 5 gekennzeichnet. Auch bei der vorauseilenden Gruppe4 leuchten die Lichtquellen 1'a und 1'j, die den Anfang und das Ende der Gruppe 2 darstellen. Eine entsprechende Anzeige gibt es hier beispielsweise auch für Gruppe 3, 2, und 1. Der Bediener weiß nun, dass er die Wurstkette z.B. jeweils zwischen den leuchtenden Anzeigeeinrichtungen 1'j und 1a, 1"j und 1'a etc. trennen muss und kann diese Stelle einfach auffinden. Die einzelnen Lichtquellen werden von der Steuerung 16 derart angesteuert, dass sich die Anzeige synchron zur Hakenbewegung mitbewegt.

Fig. 2b zeigt die in Fig. 2a gezeigte Vorrichtung zu einem späteren Zeitpunkt. Wie zu erkennen ist, hat sich die Gruppe 1 hier bereits weiter in Transportrichtung T bewegt. Das heißt, die Haken 2a-2j wurden in Transportrichtung T zusammen mit dem Antriebsmittel 5 weiterbewegt. Die Lichtleiste 10 wurde so angesteuert, dass bei Bewegung des Hakens 2a, der den Anfang darstellt, stets eine dem Haken 2a räumlich zugeordnete Lichtquelle 1 leuchtet. Die den Haken 2b-2i, die zwischen Anfangs- und Endhaken liegen, räumlich zugeordneten Lichtquellen, bleiben stets ausgeschaltet. Das bedeutet, dass immer dann, wenn ein Haken, der einen Anfang oder ein Ende einer Gruppe darstellt, eine Lichtquelle passiert, diese aufleuchtet. Entsprechendes gilt auch für die weiteren Gruppen. Es wäre auch möglich, dass nur das Ende oder nur der Anfang angezeigt wird. Dann weiß der Bediener, dass er entweder in Transportrichtung vor dem Ende oder nach dem Anfang durchtrennen muss. Auch eine inverse Darstellung ist möglich, wobei die Lichtquellen die den Anfang oder das Ende anzeigen nicht leuchten, während die restlichen Lichtquellen leuchten. Wie aus der Figur 2a und 2b hervorgeht, ist dann, wenn p ≠ Null, d.h. die Lichtleiste beabstandet zum Transportmittel 5 läuft, in Kurven der Abstand der angesteuerten Lichtquellen, die jeweils einem Haken entsprechen, größer, d.h. hier in diesem Bereich ist ein größerer Abstand der nacheinander angesteuerten Lichtquellen gewählt. Lichtquellen, die zwischen den in den Figuren 2a und 2b dargestellten Lichtquellen auf der Lichtleiste liegen, werden einfachheitshalber nicht dargestellt. In den Kurvenbereichen ist die exakte Anzeige des Gruppenanfangs und/oder -endes vorwiegend zum manuellen Trennen der Wurstgruppen erforderlich.

Die gezeigte Ausführungsform ist nur ein Beispiel, es sind beliebige andere Lichtszenarien möglich, solange die Anzeige den jeweiligen Gruppenanfang und/oder das Gruppenende der sich bewegenden Würste auf den Haken erkennen lässt.

Handelt es sich nicht um Ketten, sondern um Würste, die beispielsweise, wie im Zusammenhang mit Fig. 4b und c beschrieben sind, aufgehängt sind, so dient diese Anzeige auch zum korrekten Einführen des Rauchstocks. Der Bediener weiß dann beispielsweise, dass er den Rauchstock zwischen der Anzeigeeinrichtung 1'j und 1a einführen muss und nach der Anzeigeeinrichtung 1j wieder ausfädeln muss. Durch Anheben und seitliches Verschwenken können die Wurstketten dann aus den Haken seitlich entnommen werden derart, dass der Rauchstock nicht an die Lichtlaufleiste 10 anstößt. Ist die Lichtlaufleiste auf Vorder- und Rückseite angeordnet, so kann auch auf der Hinterseite der Aufhängevorrichtung gearbeitet werden. Beispielsweise kann an der Vorderseite geschnitten werden und an der Rückseite entnommen.

Es ist auch möglich, dass die Lichtlaufleiste derart ausgebildet ist, dass mehrfarbige Lichtquellen verwendet werden, z.B. mehrfarbige LED-Streifen, so dass Gruppen auf der Vorder- und Rückseite separat angezeigt werden können, wobei ein Bediener auf der Vorderseite Gruppen einer ersten Farbe durchtrennt und/oder abnimmt und der Bediener auf der Rückseite Gruppen einer zweiten Farbe durchtrennt und/oder abnimmt.

In den Figuren sind in dem letzten Abschnitt, bevor die Haken wieder zu der Übergabeposition kommen, keine Würste 20 mehr dargestellt, da in diesem Bereich die Würste bereits abgenommen worden sind. Die Würste sollten abgenommen werden, solange sie sich noch auf dem geraden Transportweg befinden.

Eine Anzeige eines Wurstgruppenanfangs- und/oder -endes in einem Bereich nach dem letzten Entnahmebereich (z. B. B4) ist also nicht notwendig. Bei Gruppe 1 in Fig. 2b sind die Würste bereits von den Haken entnommen. Aus diesem Grund ist es nicht notwendig, dass die Lichtquellen zwischen Hakengruppe 1 und 6 leuchten.

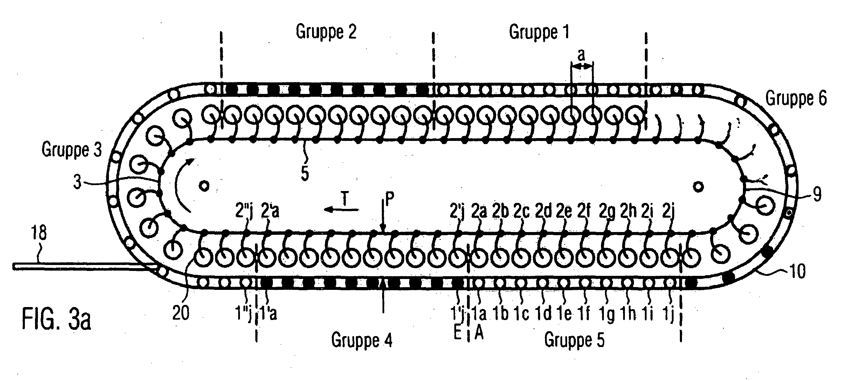

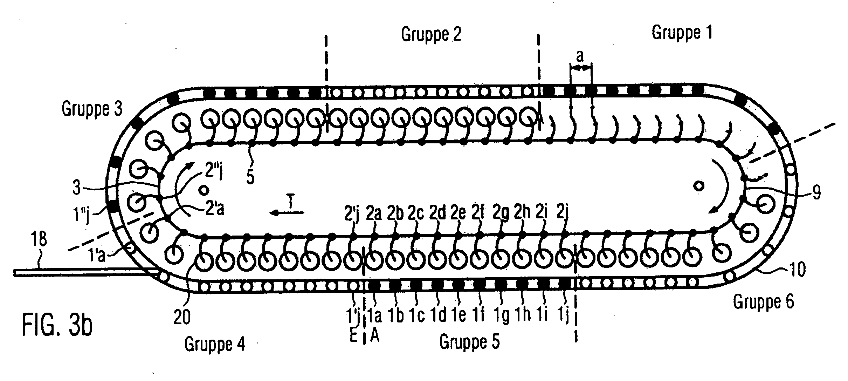

Fig. 3a und 3b entsprechen einer Ausführungsform, die dem im Zusammenhang mit Fig. 1-2b gezeigten ersten Ausführungsbeispiel entspricht mit der Ausnahme, dass hier die Lichtquellen anders angesteuert werden. Während bei der ersten Variante, die im Zusammenhang mit Fig. 2a und 2b beschrieben wurde, die Lichtquellen zwischen einem ersten Zustand, der einen Gruppenanfang A und/oder einem Gruppenende E der Aufhängehaken entspricht und einem zweiten Zustand, der keinem Gruppenanfang oder Gruppenende entspricht, geschaltet wurden (wobei der erste Zustand An oder Aus sein kann und der zweite Zustand der entsprechend andere Zustand ist), wird bei der neuen Variante zwischen einem ersten Zustand, der Aufhängehaken (2a-j) einer ersten Gruppe entspricht und einem zweiten Zustand, der den Aufhängehaken einer nachfolgenden zweiten Gruppe entspricht, geschaltet. Wie in Fig. 3a gezeigt, wurden die aufgenommenen Haken der Gruppe 5 bereits bis in den vorderen Bereich der Aufhängevorrichtung 100 transportiert.

Die Steuerung 16 erhält ein Signal, das angibt, wann der erste Haken 1 a einer Gruppe von dem Aufhängehaken 20 aufgenommen wird und steuert dann entsprechend die Anzeigeeinrichtungen 1, hier der Lichtlaufleiste, an.

Die den Haken 2a-2j räumlich zugeordneten Lichtquellen leuchten nicht. Das heißt, dass die Gruppe 5 unbeleuchtet bleibt. Hingegen leuchten die den Haken 2'a-2'j räumlich zugeordneten Lichtquellen 1'a-1'j. Die Anzeigeelemente für die Haken der Gruppe 3 leuchten wiederum nicht. Das bedeutet, dass die Zustände der Anzeigeeinrichtungen nachfolgender Gruppen jeweils unterschiedlich sind. Aufeinanderfolgende Gruppen können auch durch verschiedene Farben angezeigt werden. Wie aus Fig. 3b deutlich wird, wird die Lichtlaufleiste derart von der Steuerung 16 angesteuert, dass sich die Anzeige synchron zur Aufnahmehakenbewegung mitbewegt. Wie in Fig. 3b gezeigt ist, hat sich hier die Hakengruppe 2a-2j sowie die Anzeige 1a-1j weiter in Transportrichtung bewegt. Das bedeutet, dass die Anzeigeeinrichtungen auf der Lichtlaufleiste immer dann zu leuchten beginnen, wenn sie Haken einer bestimmten Gruppe, hier beispielsweise der Gruppe 5, 3 und 1, passieren. Somit kann der Bediener einfach erkennen wo ein Gruppenende E und ein Gruppenanfang A ist, da die jeweiligen Anzeigeeinrichtungen 1'j, 1a einen unterschiedlichen Zustand aufweisen. Somit kann der Bediener hier, wie zuvor im Zusammenhang mit Fig. 2a,b beschrieben ist, den Wurststrang durchtrennen und/oder die Gruppe mit einem Rauchstab 18 abnehmen.

In Fig. 3a sind die Würste der Gruppe 6 bereits von den Haken entnommen. In einer nachsten Runde werden die Haken der Gruppe 6 erst wieder ab der Übergabeposition 9 behängt, so dass die Lichtquellen ab der Position 9 wieder leuchten.

Dadurch, dass sich die Anzeige mit der Hakenbewegung mit bewegt, ergibt sich der Vorteil, dass der Bediener nicht zu einem bestimmten Zeitpunkt den Wurststrang durchtrennen muss oder den Wurststrang abnehmen muss.

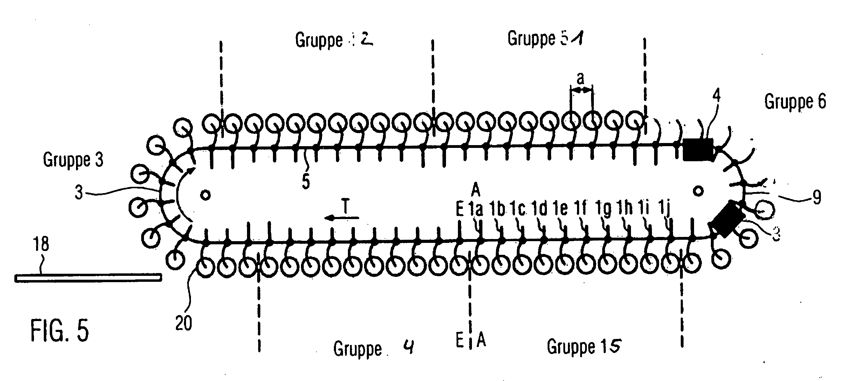

Fig. 5 zeigt ein zweites Ausführungsbeispiel der vorliegenden Erfindung. Fig. 5 entspricht dabei dem in den Fig. 1 bis 3 gezeigten Ausführungsbeispiel, wobei hier jedoch keine Lichtlaufleiste verwendet wird, sondern Anzeigeeinrichtungen 1, die jeweils an einem Aufhängehaken 2 befestigt sind. Somit können die Anzeigeeinrichtungen 1 zusammen mit den Haken 2 in Transportrichtung T bewegt werden. Die Anzeigeeinrichtungen sind derart ausgebildet, dass sie mechanisch in ihrer Position verstellt werden können und/oder ihre Farbe ändern können, um so den Gruppenanfang und/oder das Gruppenende anzuzeigen. Dabei entspricht die in Fig. 5 gezeigte Variante der Variante in Fig. 2a, bei der die Anzeigeeinrichtung, hier am Anfang und am Ende, einen anderen Zustand aufweist als die Anzeigeeinrichtungen 1b-1i zwischen den äußeren Anzeigeeinrichtungen. Somit kann der Bediener optisch das Gruppenende und/oder den Gruppenanfang E A wahrnehmen und, wie zuvor beschrieben, beispielsweise die Wurstkette an der richtigen Stelle durchtrennen. Die Vorrichtung weist dazu eine Einstelleinrichtung 3 auf, die mit der Steuereinrichtung 16 verbunden ist, und die die unterschiedlichen Anzeigeeinrichtungen 1, die dem jeweiligen Haken 2 zugeordnet sind, verändert bzw. verstellt. In Fig. 5 wird beispielsweise ein Teil der Anzeigeeinrichtung am Gruppenanfang und am Gruppenende ausgefahren. Beispiele für entsprechende Anzeigeeinrichtungen werden nachfolgend erläutert. Vor der Übergabeposition 9 kann noch ein Neutralisator 4 vorgesehen sein, der dann ebenfalls mit der Steuerung 16 verbunden ist, und der alle einlaufenden Anzeigeeinrichtungen in eine gleiche Position bringt.

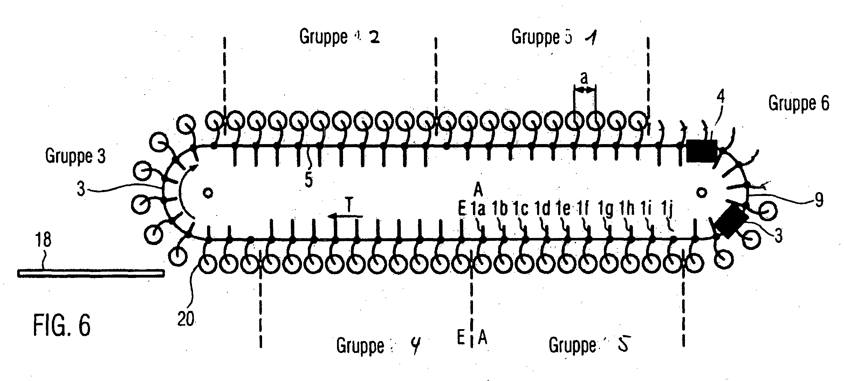

Fig. 6 entspricht dem in Fig. 5 gezeigten Ausführungsbeispiel, wobei die Anzeigeeinrichtungen aufeinanderfolgender Gruppen unterschiedliche Zustände aufweisen, wie im Zusammenhang mit Fig. 3a und 3b erläutert.

Nachfolgend werden Anzeigeeinrichtungen gezeigt, die im Zusammenhang mit dem in Fig. 5 und 6 gezeigten Ausführungsbeispiel verwendet werden können.

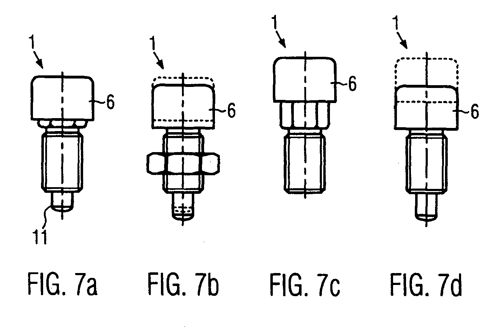

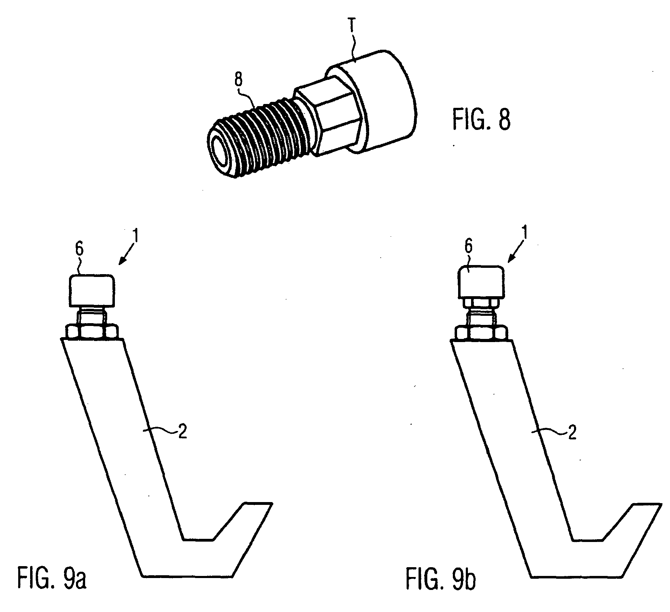

Beispielsweise kann, wie in Fig. 7 und 8 dargestellt wird, ein Verriegelungsbolzen als Anzeigeeinrichtung 1 verwendet werden. Der Verriegelungsbolzen ist im oberen Bereich des Aufhängehakens 2 in einer entsprechenden Bohrung, wie auch in Fig. 9a schematisch dargestellt, angeordnet. Durch Drücken des Betätigungsknopfs 6 kann ein Raststift 11 ausgefahren und eingezogen werden (Push-Push-Verriegelungsmechanik). Bei dem Verriegelungsbolzen (z.B. Verriegelungsbolzen GN514 der Fa. Ganter) wird der Raststift mit Hilfe einer Feder über eine sogenannte Herzkurvenmechanik bewegt. Fig. 7a zeigt eine untere Position des Verriegelungsbolzens. Wird nun auf den Kopf 6 gedrückt, wie in Fig. 7b gezeigt, bewegt sich das obere Ende des Bolzens nach oben in eine erhöhte Position. Durch erneutes Drücken auf den Kopf 6 kann der Bolzen wieder in eine untere Position (Fig. 7d, Fig. 7a) gebracht werden. Der Bediener kann den Unterschied zwischen einer unteren Position, die in Fig. 9a gezeigt ist und einer oberen Position, die in Fig. 9b gezeigt ist, unterscheiden. Dazu ist die Einstelleinrichtung 3 derart ausgebildet, dass ein Mechanismus vorgesehen ist, der von oben auf den Kopf drückt, beispielsweise über einen Elektrohubmagneten, der von der Steuerung 16 angesteuert wird und entsprechend der beabsichtigten Zustände, wie im Zusammenhang mit Fig. 5 und 6 beschrieben wurde, den Bolzen in eine entsprechende Position bringt. Durch einen Merker in der Steuerung 16 wird der Zustand des Bolzens für jeden Haken 2 gespeichert.

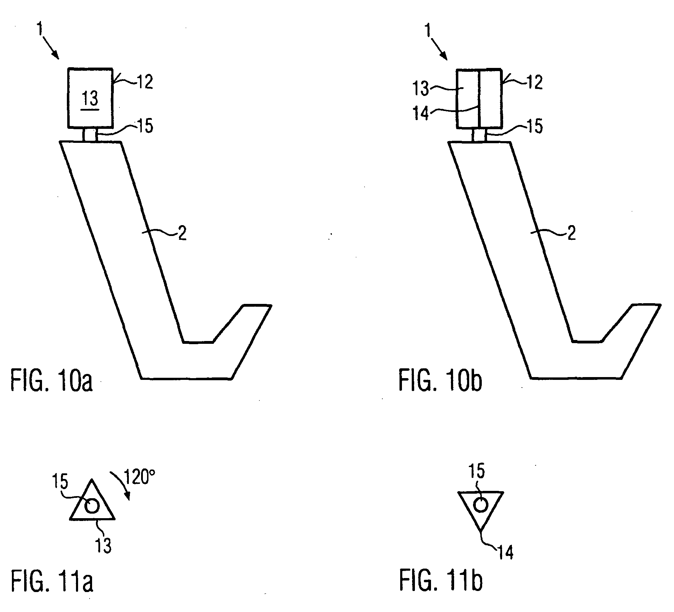

Eine andere Möglichkeit wäre beispielsweise, wie in Fig. 10a-11b dargestellt ist, als Anzeigeeinrichtung einen um eine Achse 15, die mit dem Haken 2 verbunden ist, drehbaren Körper auszubilden. Durch Drehen des Körpers kann die Anzeige entsprechend in verschiedene Zustände überführt werden.

Der drehbare Körper ist hier ein regelmäßiges, gleichschenkeliges, dreiseitiges Prisma, wobei in einem ersten Zustand, wie in Fig. 10a gezeigt ist, eine Seitenfläche 13 des Prismas erkennbar ist. Wird, wie in Fig. 11a dargestellt, das Prisma um beispielsweise 120° gedreht, so ist, wie in Fig. 10b und 11b zu erkennen ist, nicht mehr die Fläche 13 sondern die Vorderkante 14 erkennbar. Somit erkennt der Bediener leicht unterschiedliche Zustände der veränderbaren Anzeigeeinrichtung. Die Fläche 13 kann dazu noch eingefärbt sein.

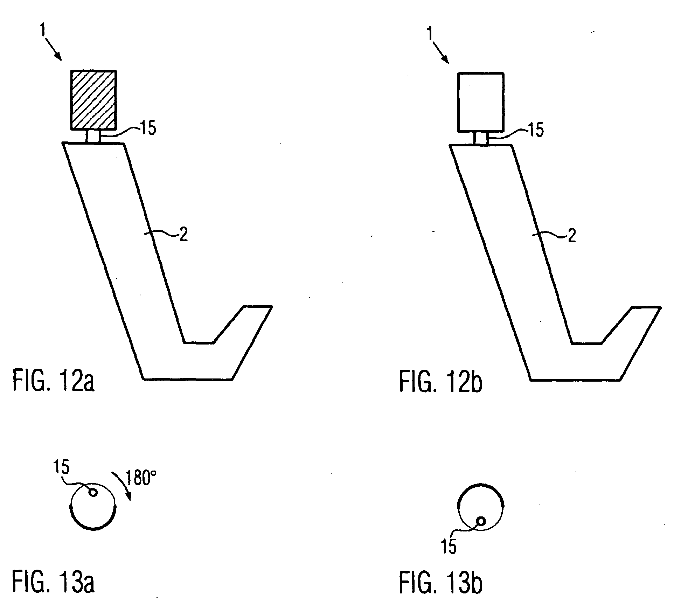

Wie im Zusammenhang mit Fig. 12a-13b gezeigt ist, kann als Anzeigeeinrichtung 1 auch beispielsweise ein um eine Achse 15 exzentrisch drehbar gelagertes Teil verwendet werden. Der Exzenter weist, wie insbesondere aus den Fig. 13a und 13b hervorgeht, auf seiner Vorder- und Rückseite unterschiedliche Farben auf. Durch Drehen des Exzenters um 180° wird bei Betrachtung der Vorderseite der Haken ein Zustandswechsel erkannt. Während in Fig. 3a die Vorderansicht des Exzenters dunkel ist, ist in Fig. 13b die Vorderansicht des Exzenters hell.

Auch hier kann die Einstelleinrichtung 3 die Drehbewegung des Exzenters bewerkstelligen, entsprechend dem Zustand, der für einen Haken angezeigt werden soll. Die Drehbewegung kann beispielsweise über ein sich quer zur Transportrichtung bewegendes Teil erfolgen, das gegen den achsfernen Bereich des Exzenters drückt. Die Bewegung des Teils kann ebenfalls über einen Hubmagneten realisiert werden. Die Einstelleinrichtung kann also zwischen den beiden Zuständen, die in Fig. 12a und 12b gezeigt sind, umschalten. Hier führt der Exzenter eine Drehung um 180° aus. Damit die Exzenter sicher eingestellt werden können, werden sie vor der Positionierung durch die Einstelleinrichtung in eine neutrale Zwischenstellung durch den Neutralisator 4 gebracht. Dies kann beispielsweise über eine entsprechende Führung passieren. Die Positionierung der Exzenter in der Endlage hängt auch von der Reibung und deren Lagerung ab.

Die im Zusammenhang mit Fig. 9 bis 13 gezeigten Anzeigeeinrichtungen sind nur beispielhaft. Viele unterschiedliche Varianten der verstellbaren Teile und der Einstelleinrichtungen sind denkbar. Wesentlich ist nur, dass über eine Einstelleinrichtung die Position und/oder Farbe einer Anzeigeeinrichtung derart verändert werden kann, dass dies vom Bediener gut unterschieden werden kann.

In Fig. 14 ist eine weitere Ausführungsform der vorliegenden Erfindung gezeigt. Die Markierung der verschiedenen nachfolgenden Gruppen erfolgt hier an der Aufhängevorrichtung durch mindestens einen Laserpointer. Bei diesem Ausführungsbeispiel sind zwei Laserpointer 1, 1' gezeigt. Die zwei Laserpointer 1, 1' sind über der Aufhängevorrichtung positioniert und werden über eine Einstelleinrichtung verstellt, hier beispielsweise einen Verstellmotor, der den Laserpointer um eine Achse dreht derart, dass der Anzeigepunkt 40 sich synchron zur Bewegung der Haken mitbewegt. Die Einstelleinrichtung kann hier ein Motor sein, der ebenfalls mit der Steuerung 16 verbunden ist. Der Anzeigepunkt 40 zeigt auf einen Punkt am Gruppenende bzw. Gruppenanfang, d.h. zwischen zwei Gruppen. In der Mitte wird der Anzeigepunkt 40 vom ersten Laser 1 an den zweiten Laser 1' übergeben. Dadurch wird eine zu extreme Schrägstellung vermieden. Die beiden Laserpointer 1, 1' müssen mit einer Teachfunktion auf zwei Referenzpositionen justiert werden und bekommen während des Betriebs von der Steuerung 16 laufend die Position des Gruppenendes bzw. -anfangs mitgeteilt. Der Antrieb stellt den Winkel der Laser laufend so ein, dass die zwei Lichtstrahlen immer auf das Gruppenende bzw. den Gruppenanfang zeigen. Diese Lösung bringt den Vorteil mit sich, dass es zu keiner Kollision bei der Entnahme der Portionen aus den Haken kommen kann.

## Patentansprüche

1. Aufhängevorrichtung (100) zum Aufhängen von Würsten (20), insbesondere Wurstketten, mit mehreren umlaufenden Aufhängehaken (2), wobei die Aufhängevorrichtung (100) derart ausgebildet ist, dass sie mehrere Gruppen von Würsten (20) aufnehmen kann, die jeweils auf n-Aufhängehaken (2) aufgehängt werden (n ∈ IN),
**gekennzeichnet durch**
mindestens eine veränderbare Anzeigeeinrichtung (1), die ein Gruppenende (E) und/oder einen Gruppenanfang (A) anzeigen kann.

2. Aufhängevorrichtung (100) nach Anspruch 1, **dadurch gekennzeichnet, dass** die Abstände (a) zwischen den Aufhängehaken (2) konstant sind und vorzugsweise die Aufhängehaken (2) über ein umlaufendes Antriebselement (5) antreibbar sind.

3. Aufhängevorrichtung (100) nach mindestens Anspruch 1 oder 2, **dadurch gekennzeichnet, dass** die Aufhängevorrichtung (100) weiter eine Einstelleinrichtung (3) umfasst, über die der Zustand der Anzeigeeinrichtung (1) veränderbar ist, insbesondere
a) zwischen einem ersten Zustand, der einem Gruppenanfang (A) und/oder ein Gruppenende (E) der Aufhängehaken entspricht und einem zweiten Zustand, der keinem Gruppenanfang oder Gruppenende entspricht oder insbesondere
b) zwischen einem ersten Zustand, der Aufhängehaken (2a-j) einer ersten Gruppe anzeigt und einem zweiten Zustand, der Aufhängehaken (2a-j) einer nachfolgenden zweiten Gruppe anzeigt.

4. Aufhängevorrichtung (100) nach Anspruch 3, **dadurch gekennzeichnet, dass** die Aufhängevorrichtung eine Steuerung (16) umfasst, in der die bestimmte Aufhängehakenanzahl pro Gruppe eingegeben werden kann, wobei die Steuerung (16) die Einstelleinrichtung ansteuert.

5. Aufhängevorrichtung (100) nach mindestens einem der Ansprüche 1 bis 4, **dadurch gekennzeichnet, dass** die Anzeigeeinrichtung (1) jeweils als ein am Haken (2) angeordnetes, in seiner Position und/oder Farbe veränderbares Teil ausgebildet ist.

6. Aufhängevorrichtung (100) nach mindestens einem der Ansprüche 1 bis 4, **dadurch gekennzeichnet, dass** die Aufhängevorrichtung (100) mindestens einen, vorzugsweise mindestens zwei bewegbare, insbesondere verschwenkbare Laserpointer umfasst, der auf ein Gruppenende (5) und/oder einen Gruppenanfang (A) zeigt.

7. Aufhängevorrichtung (100) nach mindestens einem der Ansprüche 1 bis 5, **dadurch gekennzeichnet, dass** die Anzeigeeinrichtung (1) eine Lichtquelle, insbesondere LED, umfasst.

8. Aufhängevorrichtung (100) nach Anspruch 7, **dadurch gekennzeichnet, dass** mehrere Lichtquellen (1) , insbesondere mehrere LEDs, auf einer Lichtleiste (10) angeordnet sind, die zumindest teilweise an der Umlaufbahn der Haken (2) angeordnet ist.

9. Aufhängevorrichtung (100) nach mindestens Anspruch 7 oder 8, **dadurch gekennzeichnet, dass** eine Steuerung (16) die Einstelleinrichtung derart ansteuert, dass der Gruppenanfang und/oder das Gruppenende durch eine oder mehrere in Transportrichtung der Aufhängehaken mitlaufend leuchtende Lichtquellen, insbesondere LEDs angezeigt wird.

10. Aufhängevorrichtung (100) nach mindestens einem der Ansprüche 8 bis 9, **dadurch gekennzeichnet, dass** die Lichtleiste (10) einen transparenten Schutzmantel insbesondere aus Silikon aufweist.

11. Aufhängevorrichtung (100) nach mindestens einem der Ansprüche 8 bis 10, **dadurch gekennzeichnet, dass** die Lichtleiste (10) mehrfarbige Lichtquellen, insbesondere LEDs umfasst.

12. Aufhängevorrichtung (100) nach mindestens einem der Ansprüche 1 bis 11, **dadurch gekennzeichnet, dass** sich das angezeigte Gruppenende und/oder der Gruppenanfang synchron zur Bewegung der Aufhängehaken (2) in Transportrichtung (T) mit bewegt.

13. Verfahren zum Aufhängen von Würsten vorzugsweise mit einer Aufhängevorrichtung (100) nach mindestens einem der Ansprüche 1 bis 12, wobei die Würste (20), insbesondere Wurstketten, auf Aufhängehaken (2) aufgenommen und an den Aufhängehaken (2) hängend in Transportrichtung (T) transportiert werden, **dadurch gekennzeichnet, dass** das Gruppenende (E) und/oder der Gruppenanfang (A) einer Wurstgruppe über eine veränderbare Anzeigeeinrichtung (1) angezeigt wird.

14. Verfahren nach Anspruch 13, **dadurch gekennzeichnet, dass** sich die Anzeige des Gruppenendes und/oder Gruppenanfangs synchron zur Bewegung der Aufhängehaken (2) in Transportrichtung mit bewegt, und insbesondere das Gruppenende und/oder der Gruppenanfang durch eine oder mehrere auf einer Lichtleiste in Transportrichtung mitlaufend betriebene Lichtquellen, insbesondere LEDs, angezeigt wird.

15. Verfahren nach mindestens einem der Ansprüche 13 bis 14, **dadurch gekennzeichnet, dass** die Wurstkette auf den Aufhängehaken (2) in Transportrichtung (T) vor dem angezeigten Gruppenende (E) bzw. nach dem angezeigten Gruppenanfang (A) der folgenden Gruppe durchtrennt wird und/oder an der angezeigten Stelle ein Rauchstock zur Entnahme der folgenden Gruppe eingeführt wird.

## Claims

1. Suspension apparatus (100) for suspending sausages (20), in particular sausage chains, comprising a plurality of circulating suspension hooks (2), the suspension apparatus (100) being configured such that it is able to accommodate a plurality of groups of sausages (20), the respective sausages being suspended from n suspension hooks (2) (n ∈ IN),
**characterised by**
at least one variable indicator (1) capable of indicating a group end (E) and/or a group beginning (A).

2. Suspension apparatus (100) according to claim 1, **characterised in that** the distances (a) between the suspension hooks (2) are constant, and that, preferably, the suspension hooks (2) can be driven by a circulating driving element (5).

3. Suspension apparatus (100) according to at least claim 1 or 2, **characterised in that** the suspension apparatus (100) additionally includes an adjustment device (3) through which the state of the indicator (1) can be changed, in particular
a) between a first state corresponding to a group beginning (A) and/or a group end (E) of the suspension hooks and a second state which does not correspond to any beginning or end of a group or in particular
b) between a first state indicating the suspension hooks (2a-j) of a first group and a second state indicating the suspension hooks (2a-j) of a subsequent second group.

4. Suspension apparatus (100) according to claim 3, **characterised in that** the suspension apparatus includes a control unit (16) into which the specific number of suspension hooks per group can be inputted, said control unit (16) controlling the adjustment device.

5. Suspension apparatus (100) according to at least one of claims 1 to 4, **characterised in that** each indicator (1) is configured as a component which is arranged on the hook (2) and which is variable as regards its position and/or colour.

6. Suspension apparatus (100) according to at least one of claims 1 to 4, **characterised in that** the suspension apparatus (100) comprises at least one, preferably at least two, movable, in particular pivotable, laser pointers pointing to a group end (E) and/or to a group beginning (A).

7. Suspension apparatus (100) according to at least one of claims 1 to 5, **characterised in that** the indicator (1) comprises a light source, in particular an LED.

8. Suspension apparatus (100) according to claim 7, **characterised in that** a plurality of light sources (1), in particular a plurality of a LEDs, is arranged on a light bar (10), which is arranged at least partially on the circulation path of the hooks (2).

9. Suspension apparatus (100) according to at least claim 7 or 8, **characterised in that** a control unit (16) controls the adjustment device such that the group beginning and/or the group end is indicated by one or more light sources, in particular LEDs, lighting up in the conveying direction of the suspension hooks together with the movement of the suspension hooks.

10. Suspension apparatus (100) according to at least one of claims 8 to 9, **characterised in that** the light bar (10) includes a transparent protective cover, in particular made of silicone.

11. Suspension apparatus (100) according to at least one of claims 8 to 10, **characterised in that** the light bar (10) comprises multi-coloured light sources, in particular LEDs.

12. Suspension apparatus (100) according to at least one of claims 1 to 11, **characterised in that** the indicated group end and/or group beginning moves in synchronism with the movement of the suspension hooks (2) in the conveying direction (T).

13. Method for suspending sausages, preferably by means of a suspension apparatus (100) according to at least one of claims 1 to 12, wherein the sausages (20), in particular sausage chains, are accommodated on suspension hooks (2) and conveyed in the conveying direction (T) so as to be suspended from the suspension hooks (2), **characterised in that** the group end (E) and/or the group beginning (A) of a sausage group is indicated via a variable indicator (1).

14. Method according to claim 13, **characterised in that** the indication of the group end and/or the group beginning moves synchronously together with the movement of the suspension hooks (2) in the conveying direction, and that especially the group end and/or the group beginning is indicated by one or more light sources, in particular LEDs, arranged on a light bar and operated in the conveying direction together with the movement of the hooks.

15. Method according to at least one of claims 13 to 14, **characterised in that** the sausage chain suspended from the suspension hooks (2) is cut through upstream of the indicated group end (E) and/or downstream of the indicated beginning (A) of the subsequent group, when seen in the conveying direction (T), and/or a smoke bar for removing the subsequent group is inserted at the point indicated.

## Revendications

1. Dispositif d'accrochage ou de suspension (100) destiné à accrocher ou suspendre des saucisses (20), notamment des chapelets ou chaines de saucisses, comprenant plusieurs crochets de suspension (2) en révolution, le dispositif de suspension (100) étant configuré de manière à pouvoir recevoir plusieurs groupes de saucisses (20), qui sont suspendus respectivement sur n crochets de suspension (2) (n ∈ IN),
**caractérisé par**
au moins un dispositif de visualisation (1) modifiable ou variable, qui est en mesure d'indiquer ou de visualiser une fin de groupe (E) et/ou un début de groupe (A).

2. Dispositif de suspension (100) selon la revendication 1, **caractérisé en ce que** les distances (a) entre les crochets de suspension (2) sont constantes, et les crochets de suspension (2) peuvent de préférence être entraînés par l'intermédiaire d'un élément d'entraînement (5) en révolution.

3. Dispositif de suspension (100) selon au moins la revendication 1 ou la revendication 2, **caractérisé en ce que** le dispositif de suspension (100) comprend par ailleurs, un dispositif de réglage (3) par l'intermédiaire duquel il est possible de modifier l'état du dispositif de visualisation (1), notamment
a) entre un premier état, qui correspond à un début de groupe (A) et/ou une fin de groupe (E) des crochets de suspension, et un deuxième état, qui ne correspond pas à un début de groupe ou à une fin de groupe, ou notamment
b) entre un premier état, qui indique ou visualise des crochets de suspension (2a-j) d'un premier groupe, et un deuxième état, qui indique ou visualise des crochets de suspension (2a-j) d'un deuxième groupe suivant.

4. Dispositif de suspension (100) selon la revendication 3, **caractérisé en ce que** le dispositif de suspension comprend un système de commande (16) dans lequel il est possible d'introduire le nombre de crochets de suspension déterminé par groupe, le système de commande (16) assurant la commande du dispositif de réglage.

5. Dispositif de suspension (100) selon l'une au moins des revendications 1 à 4, **caractérisé en ce que** le dispositif de visualisation (1) est réalisé respectivement en tant que pièce agencée sur le crochet (2), et pouvant être modifiée quant à sa position et/ou sa couleur.

6. Dispositif de suspension (100) selon l'une au moins des revendications 1 à 4, **caractérisé en ce que** le dispositif de suspension (100) comprend au moins un, de préférence au moins deux pointeurs-laser mobiles, notamment pivotants, qui est ou sont dirigés vers une fin de groupe (5) et/ou un début de groupe (A).

7. Dispositif de suspension (100) selon l'une au moins des revendications 1 à 5, **caractérisé en ce que** le dispositif de visualisation (1) comprend une source de lumière, notamment une LED.

8. Dispositif de suspension (100) selon la revendication 7, **caractérisé en ce que** plusieurs sources de lumière (1), notamment plusieurs LEDs, sont agencées sur une barrette lumineuse (10), qui est agencée au moins en partie sur la trajectoire de révolution des crochets (2).

9. Dispositif de suspension (100) selon au moins la revendication 7 ou la revendication 8, **caractérisé en ce que** le système de commande (16) commande le dispositif de réglage de manière telle que le début de groupe et/ou la fin de groupe soient indiqués ou visualisés par une ou plusieurs sources de lumière, notamment LEDs, allumées en suivant le mouvement de déplacement dans la direction de transport.

10. Dispositif de suspension (100) selon l'une au moins des revendications 8 à 9, **caractérisé en ce que** la barrette lumineuse (10) présente une enveloppe de protection transparente, notamment en silicone.

11. Dispositif de suspension (100) selon l'une au moins des revendications 8 à 10, **caractérisé en ce que** la barrette lumineuse (10) comprend des sources de lumière, notamment des LEDs, de couleurs multiples.

12. Dispositif de suspension (100) selon l'une au moins des revendications 1 à 11, **caractérisé en ce que** la fin de groupe et/ou le début de groupe indiqués ou visualisés se déplacent de manière synchrone avec le mouvement des crochets de suspension (2) dans la direction de transport (T).

13. Procédé destiné à suspendre des saucisses, de préférence à l'aide d'un dispositif de suspension (100) selon l'une au moins des revendications 1 à 12, les saucisses (20), notamment sous forme de chapelets ou chaines de saucisses, étant reçues sur des crochets de suspension (2) et étant transportées dans la direction de transport (T) en étant suspendues sur les crochets de suspension (2), **caractérisé en ce que** la fin de groupe (E) et/ou le début de groupe (A) d'un groupe de saucisses est ou sont indiqués ou visualisés par l'intermédiaire d'un dispositif de visualisation (1) modifiable.

14. Procédé selon la revendication 13, **caractérisé en ce que** la visualisation ou l'indication de la fin de groupe et/ou du début de groupe se déplace dans la direction de transport de manière synchrone avec le mouvement des crochets de suspension (2), et la fin de groupe et/ou le début de groupe est ou sont indiqués ou visualisés notamment par une ou plusieurs sources de lumière, notamment des LEDs, sur une barre lumineuse et fonctionnant en accompagnant le déplacement dans la direction de transport.

15. Procédé selon l'une au moins des revendications 13 à 14, **caractérisé en ce que** le chapelet de saucisses sur les crochets de suspension (2) est sectionné, en se référant à la direction de transport (T), avant la fin de groupe (E) indiquée ou visualisée, respectivement après le début de groupe (A) indiqué ou visualisé du groupe suivant, et/ou une barre de fumage est introduite à l'endroit indiqué ou visualisé, pour prélever le groupe suivant.
